# EUROPÄISCHE PATENTSCHRIFT

(11) **EP 2 022 347 B1**
(45) Veröffentlichungstag und Bekanntmachung des Hinweises auf die Patenterteilung: **23.01.2013**
(21) Anmeldenummer: 08013634.4
(22) Anmeldetag: 30.07.2008
(51) Int. Cl.: A24C 5/34, G01N 21/952

(54) **Optische Kontrolle von Produkten der Tabak verarbeitenden Industrie**
Optical control of tobacco processing industry products
Contrôle optique de produits de l'industrie du traitement du tabac

(30) Priorität: 02.08.2007 DE 102007036616
(43) Veröffentlichungstag der Anmeldung: 11.02.2009
(73) Patentinhaber: Hauni Maschinenbau AG, 21033 Hamburg (DE)
(72) Erfinder: Ibel, Michael, 25469 Halstenbek (DE); Drews, Ingo, 21509 Glinde (DE); Goetz, Jürgen, 22885 Barsbüttel (DE)
(74) Vertreter: Seemann, Ralph

(56) Entgegenhaltungen:
- EP-A- 0 548 695
- DE-A1- 10 063 293
- US-A- 4 639 592
- US-B1- 6 169 600

## Beschreibung

Die Erfindung betrifft ein Verfahren zur elektromagnetischen, insbesondere optischen, Kontrolle von Produkten der Tabak verarbeitenden Industrie in wenigstens einer Kontrollzone, in der die Produkte an wenigstens einer Bilderfassungsvorrichtung vorbei gefördert werden, wobei mittels der wenigstens einen Bilderfassungsvorrichtung wenigstens eine Aufnahme wenigstens eines Teils wenigstens eines Produkts aufgenommen wird. Die Erfindung betrifft weiter eine Einrichtung zur elektromagnetischen, insbesondere optischen, Kontrolle von in wenigstens einer Kontrollzone an wenigstens einer Bilderfassungsvorrichtung vorbei geförderten Produkten der Tabak verarbeitenden Industrie mit einer Analyseeinrichtung. Ferner betrifft die Erfindung eine Maschine der Tabak verarbeitenden Industrie.

Unter Produkten der Tabak verarbeitenden Industrie werden im Rahmen dieser Erfindung insbesondere stab- und streifenförmige Produkte bzw. Objekte wie Zigaretten, Filterstäbe, Multisegmentfilterstäbe, Zigaretten- oder Belagpapier sowie Stempelaufdrucke auf Papierbahnen oder Leimauftrag auf Papierbahnen verstanden.

Bei der optischen Kontrolle werden üblicherweise Qualitätsmerkmale an den Produkten der Tabak verarbeitenden Industrie detektiert, wie Löcher, Dimensionen, Objektidentifizierung, Stempel, Leimauftrag, Fleckendimensionen, das Vorhandensein von Filterelementen, Beschädigungen und dergleichen.

Zur optischen Kontrolle werden üblicherweise Zeilen- oder Matrixkameras eingesetzt, die wegen der Anforderung an die Abbildungs-und Auflösungsqualität mit aufwendigen, großen Objektiven ausgestattet sind. Um z.B. die gesamte Zigarettenlänge ohne Verzerrung und Beeinträchtigung der Schärfe zu betrachten, ist ein erheblicher Abstand des Messobjektes zur Kamera notwendig. Es kommt an einigen Stellen einer Maschine der Tabak verarbeitenden Industrie, wie beispielsweise einer Filteransetzmaschine, vor, dass der optische Weg mit Spiegeln mehrfach gefaltet werden muss. An vielen Stellen einer Filteransetzmaschine ist zudem eine optische Kontrolle aufgrund geometrischer Voraussetzungen in dieser Maschine nicht gegeben.

Die Beleuchtung der Messobjekte bzw. Produkte der Tabak verarbeitenden Industrie wird mit separaten Lichtquellen realisiert, die wegen des großen Abstandes zum Objekt hohe Lichtstärken besitzen müssen. Es ist unter anderem auch bekannt, das Licht unter Intensitätsverlusten mit Lichtleitkabeln an das Messobjekt heranzuführen. Die Wahrscheinlichkeit, dass in der staubigen Umgebung einer Maschine der Tabak verarbeitenden Industrie umherfliegende Partikel, wie beispielsweise Tabakstaub, die optische Kontrolle stören und es zu Fehlbewertungen kommt, ist groß und kann wegen des großen Abstandes der verwendeten Kontrolleinrichtungen nur durch aufwendige Maßnahmen reduziert werden. Solche Fehlbewertungen führen zu unerwünschtem anschließenden Auswurf der betroffenen, schadfreien, Produkte, also zum unberechtigten Schuss.

Aus DE 10 2004 040 912 A1 ist es bekannt, in einer Einrichtung zur optischen Kontrolle von Produkten der Tabak verarbeitenden Industrie, die eine Bilderfassungsvorrichtung umfasst, Gradientenindexlinsen zu verwenden, um den Abstand zwischen der Bilderfassungs-vorrichtung und den zu kontrollierenden Produkten zu verringern.

EP 0 812 548 B1 offenbart eine Vorrichtung zur Überwachung der äußeren Unversehrtheit von Zigaretten, die an einer Mehrzahl von Matrixkameras queraxial auf einer Fördertrommel vorbeigefördert werden und auf dem Förderweg um ihre Längsachse rotiert werden. Die Matrixkameras werden so verwendet, dass jede Bildzeile einer Matrixkamera eine einzelne streifenförmige Aufnahme eines Längsschnittes einer Zigarettenoberfläche macht. Die Zeitfolge der Zeilenaufnahmen ist so mit der Förderbewegung der Zigarette synchronisiert, dass von jeder Zeile einer Matrixkamera jeweils derselbe Längsschnitt der Zigarettenoberfläche aufgenommen wird. Da die Anzahl der Matrixkameras begrenzt ist, wird nur eine der Anzahl der Matrixkameras entsprechende Anzahl von Längsschnitten der Zigarettenoberfläche inspiziert, nicht aber die gesamte Oberfläche.

Da Staubteilchen oder Tabakpartikel im Allgemeinen kleiner sind als der Bildbereich der Matrixkameras, werden bei der Vorrichtung gemäß EP 0 812 548 B1 Staubteilchen, die zwischen die Zigarettenoberfläche und eine Matrixkamera geraten, dadurch identifiziert, dass die entsprechenden Flecken nur in einem Teil der Zeilenaufnahmen vorkommen, andere Zeilenaufnahmen aber einer Referenz-Zeilenaufnahme entsprechen. Solche Zigaretten werden als ordnungsgemäß behandelt.

US 6,169,600 B1 betrifft ein System und ein Verfahren zum optischen Inspizieren von Zigaretten mit hoher Geschwindigkeit während ihrer Herstellung. Eine bewegte Zigarette wird an einer TDI-Kamera vorbeigeführt, die so mit der Bewegung der Zigaretten synchronisiert ist, dass die Bilderfassung in genauer Übereinstimmung mit dem sich verschiebenden Bild bleibt, so dass das Bild des Objekts scharf bleibt. Andere Objekte, beispielsweise fliegende Staubteilchen, die sich über der Bildebene bewegen, sind nicht in Übereinstimmung mit der Bewegung des Bildes über den Sensor, so dass solche Objekte unscharf abgebildet werden.

US 4,639,592 A1 betrifft eine Zigarettenprüfvorrichtung, in der eine Reihe von Zigaretten queraxial über zwei Trommeln an optischen Sensoren vorbeigefördert werden, wobei auf der einen Trommel eine Seite der Zigaretten und auf der zweiten Trommel die andere Seite der Zigaretten inspiziert werden. Eine Auswertungs-Schaltung empfängt die Signale von den optischen Sensoren und wertet sie aus. Die Signale von den optischen Sensoren werden mit Schwellenwerten verglichen, bei deren Über- oder Unterschreiten ein Defekt festgestellt wird.

In EP 0 548 695 A2 ist eine Vorrichtung zum Inspizieren der Erscheinung von zylindrischen Objekten unter Verwendung von Bildverarbeitung offenbart. Das aufgenommene Bild eines solchen zylindrischen Objekts wird in bestimmten Bereichen maskiert, um Aufdrucke auf den zylindrischen Objekten, beispielsweise Zigaretten, zu überdecken und nicht als Fehler zu werten.

DE 100 63 293 A1 betrifft ein Verfahren und eine Vorrichtung zur mehrkanaligen Inspektion von Oberflächen im Durchlauf. Dabei werden eine farbtüchtige Kamera, beispielsweise eine Zeilenkamera, und mindestens zwei Lichtquellen verwendet. Die Lichtquellen werden synchron zum Aufnahmetakt der Kamera abwechselnd geschaltet, wodurch simultan wenigstens zwei Bilder aufgenommen werden, die passgenau aufeinander bezogen sind. Die Bilder können unterschiedliche Arten von Informationen über die Oberfläche enthalten, insbesondere Farbinformationen bei Beleuchtung der Oberfläche mit weißem homogenem Licht, Informationen über den Höhenverlauf der Oberfläche bei Beleuchtung mit strukturiertem Licht oder Informationen über die Transparenz der Oberfläche bei Beleuchtung im Durchlicht.

Demgegenüber ist es Aufgabe der vorliegenden Erfindung, eine kompakt bauende Einrichtung zur optischen Kontrolle von Produkten der Tabak verarbeitenden Industrie anzugeben, bei denen die gesamte Oberfläche kontrolliert wird, um grundsätzlich Störeinflüsse bei der optischen Kontrolle derartiger Produkte zu verringern.

Diese Aufgabe wird gelöst durch ein Verfahren zur elektromagnetischen, insbesondere optischen, Kontrolle von Produkten der Tabak verarbeitenden Industrie in wenigstens einer Kontrollzone, in der die Produkte an wenigstens einer Bilderfassungsvorrichtung vorbei gefördert werden, wobei mittels der wenigstens einen Bilderfassungsvorrichtung wenigstens eine Aufnahme wenigstens eines Teils wenigstens eines Produkts aufgenommen wird, wobei eine einzelne Aufnahme wenigstens eines Teils eines Produkts auf das Vorhandensein wenigstens einer Störsignatur eines zwischen dem Produkt und der Bilderfassungsvorrichtung befindlichen Störobjekts überprüft wird, das dadurch weitergebildet ist, dass die Störsignatur eine von einer Fördergeschwindigkeit und/oder Förderrichtung der Produkte verschiedene Geschwindigkeit oder Bewegungsrichtung eines Störobjekts wiedergibt, wobei als Störsignatur ein Streifen oder eine Dreiecksform in der Aufnahme des Produkts erkannt wird, wobei zur Korrektur der Aufnahme der durch die Störsignatur betroffene Bereich ausmaskiert wird und durch umgebungsspezifische Daten, insbesondere durch umgebungsspezifische Helligkeitswerte, normalisiert oder durch einen entsprechenden Bereich einer Referenzaufnahme ersetzt wird, wobei die Bilderfassungsvorrichtung eine Zeilenkamera umfasst und die Aufnahme aus aufeinander folgenden zeilen auf nahmen der Zeileinkamera Zusammengesetzt wird.

Die Erfindung beruht auf dem Grundgedanken, dass zur Beschleunigung des optischen bzw. elektromagnetischen Kontrollverfahrens und zur Reduzierung des technischen Aufwandes jeder Teil der Oberfläche von Produkten der Tabak verarbeitenden Industrie, beispielsweise Zigaretten, jeweils bildlich erfasst wird und das erfasste Bild nur anhand der in dem Bild bzw. der Aufnahme enthaltenen Informationen auf das Vorhandensein von Störsignaturen überprüft wird. Selbst wenn ein Teil der Oberflächen mehrmals bildlich erfasst wird, wird jede Aufnahme einzeln auf das Vorhandensein von Störsignaturen überprüft. Damit entfällt das Erfordernis, mehrere Aufnahmen zu machen und mehrere Aufnahmen miteinander zu vergleichen. Stattdessen wird erfindungsgemäß mit wenigen Aufnahmen die gesamte Oberfläche von Produkten der Tabak verarbeitenden Industrie erfasst, so dass der Anfall einer großen Menge von Daten, die sich bei einer Mehrfachaufnahme der Produkte ergibt, deutlich reduziert.

Die streifen- bzw. dreiecksförmigen Signaturen sind mit modernen Bildanalysemitteln schnell und sicher zu erkennen, so dass eine schnelle und zuverlässige Störobjekterkennung erreicht wird.

Vorzugsweise wird die Aufnahme nach der Überprüfung auf Störsignaturen auf das Vorhandensein von Defekten auf der Produktoberfläche analysiert. Alternativ können auch andere Qualitätsmerkmale der Zigaretten bzw. Produkte der Tabak verarbeitenden Industrie nach der Überprüfung auf Störsignaturen überprüft werden. Dabei werden vorzugsweise erkannte Störsignaturen in der weiteren Analyse der Aufnahme nicht als Defekte des Produkts behandelt.

Wenn vorzugsweise die Aufnahme eine flächige Abbildung wenigstens eines flächigen Teils der Produktoberfläche ist, wird die gesamte Oberfläche des Produkts vorteilhafterweise mit einer geringen Anzahl von Aufnahmen abgedeckt. Die entstehende, zu analysierende Datenmenge wird auf diese Weise kleingehalten.

Gemäß der Erfindung umfasst die Bilderfassungsvorrichtung eine Zeilenkamera und die Aufnahme wird aus aufeinander folgenden Zeilenaufnahmen der Zeilenkamera zusammengesetzt. In dieser erfinderischen Ausführungsform wird mittels der Zeilenkamera eine Abfolge von zeitlich hintereinander versetzten Zeilenaufnahmen des an der Zeilenkamera vorbeigeförderten Produkts gemacht, so dass die Zeilen zu einer flächigen Abbildung der Produktoberfläche zusammengesetzt werden. Die Zeilenkamera weist dabei eine Optik auf, die eine Fokussierung des Bildes auf die Produktoberfläche bewirkt. Der mit jeder Zeilenaufnahme abgetastete Bereich der Produktoberfläche ist dabei ein sehr schmaler Streifen im Bereich von insbesondere wenigen Mikrometern, der einem Längsschnitt des Produkts entspricht.

Zu der Unschärfe von Staubpartikeln oder Tabakpartikeln, die zwischen der Produktoberfläche und der Zeilenkamera möglicherweise vorhanden sind, kommt in diesem Fall eine Bewegungskomponente hinzu. Da die Störpartikel sich mit einer Geschwindigkeit bewegen, die in der Regel kleiner ist als die Fördergeschwindigkeit der Produkte, treten sie während der Aufnahme mit ihrer eigenen Geschwindigkeit in den Strahlengang der Zeilenkamera ein, der zwischen der Linse und der Produktoberfläche wesentlich breiter ist als am Ort der Produktoberfläche. Sie verbleiben für einen Zeitraum im Strahlengang und bewegen sich darin fort. Dies hat zur Folge, dass die Störpartikel, die sich während der Aufnahmen im Strahlengang der Zeilenkamera befinden, in einer Vielzahl der Zeilenscans vorhanden sind, so dass die aus den Zeilenscans zusammengesetzte flächige Abbildung der Produktoberfläche einen mehr oder weniger ausgewaschenen Strich aufweist. Falls ein Störobjekt eine Bewegungskomponente auf die Zeilenkamera zu oder von der Zeilenkamera weg aufweist, verändert sich außerdem im Laufe der Aufnahme die Breite und Intensität des Striches, so dass neben einer Liniensignatur auch eine Dreieckssignatur auftritt.

Zur weiteren Verarbeitung der Aufnahme wird zur Korrektur der Aufnahme der durch die Störsignatur betroffene Bereich ausmaskiert. Dies bedeutet, dass die Störsignatur bei der weiteren Kontrolle des Objekts nicht berücksichtigt wird. Dadurch verbleibt das kontrollierte Objekt in der weiteren Verarbeitung und wird nicht schon alleine aufgrund des Vorhandenseins einer Störsignatur ausgeworfen.

Zur weiteren Vereinfachung der Analyse wird zur Korrektur der Aufnahme der durch die Störsignatur betroffene Bereich durch umgebungsspezifische Daten, insbesondere umgebungsspezifische Helligkeitswerte, normalisiert. Alternativ dazu wird zur Korrektur der Aufnahme der durch die Störsignatur betroffene Bereich durch einen entsprechenden Bereich einer Referenzaufnahme ersetzt.

In beiden Fällen ergibt sich ein korrigiertes Bild, aus dem die Störsignatur entfernt wurde und durch einen nicht durch eine Störsignatur betroffenen Datensatz ersetzt ist. Es ist zwar möglich, dass unter der Störsignatur auch ein tatsächlicher Defekt auf der Produktoberfläche vorhanden war, der unerkannt bleibt. Da es sich jedoch um kleine betroffene Bereiche handelt, ist diese Wahrscheinlichkeit gering und im Vergleich zu der Zahl von Zigaretten oder anderen Produkten, die ansonsten aufgrund einer Störsignatur ausgeworfen würden, vernachlässigbar.

Vorzugsweise wird die korrigierte Aufnahme auf das Vorhandensein von Defekten des Produkts analysiert. Auch andere Qualitätsmerkmale des Produkts werden vorteilhafterweise anhand der korrigierten Aufnahme analysiert.

Vorteilhafterweise wird mit mehreren Aufnahmen eine gesamte Oberfläche des Produkts analysiert. Damit ist es möglich, auch kleine Defekte auf der Produktoberfläche zu erkennen und die betroffenen Produkte aus dem Produktionsprozess auszuscheiden. Dazu werden vorteilhafterweise die Aufnahmen zur Analyse zu einer Gesamtaufnahme der gesamten Oberfläche des Produkts zusammengesetzt.

Die der Erfindung zugrunde liegende Aufgabe wird auch gelöst durch eine Einrichtung zur elektromagnetischen, insbesondere optischen, Kontrolle von in wenigstens einer Kontrollzone an wenigstens einer Bilderfassungsvorrichtung vorbei geförderten Produktender Tabak verarbeitenden Industrie mit einer Analyseeinrichtung, insbesondere zur Ausführung eines oben genannten erfindungsgemäßen Verfahrens, die dadurch weitergebildet ist, dass die Analyseeinrichtung zur Erkennung von Störsignaturen in Form von Streifen oder Dreiecken in einer Aufnahme des Produkts von zwischen dem Produkt und der Bilderfassungsvorrichtung befindlichen Störobjekten ausgebildet ist, wobei eine Korrekturvorrichtung zur Korrektur von Störsignaturen in von der Bilderfassungsvorrichtung aufgenommenen Aufnahmen vorgesehen, die dazu ausgebildet ist, einen durch eine Störsignatur betroffenen Bereich einer Aufnahme auszumaskieren, wobei die Korrekturvorrichtung ausgebildet ist, einen durch eine Störsignatur betroffenen Bereich einer Aufnahme durch umgebungsspezifische Daten, insbesondere umgebungsspezifische Helligkeitswerte, zu normalisieren oder durch einen entsprechenden Bereich einer Referenzaufnahme zu ersetzen, wobei die Bildererfassungsvorrichtung eine Zeileinkamera umfasst. Dabei ist die Analyseeinrichtung zur Erkennung von Defekten auf der Produktoberfläche unter Ausschluss von erkannten Störsignaturen ausgebildet. Hierzu wird auf die obigen Ausführungen verwiesen.

Erfindungsgemäß umfasst die Bilderfassungsvorrichtung eine Zeilenkamera, mittels der besonders charakteristische Störsignaturen auftreten.

Schließlich wird die der Erfindung zugrunde liegende Aufgabe auch gelöst durch eine Maschine der Tabak verarbeitenden Industrie, die eine Einrichtung wie oben beschrieben umfasst.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Detailansicht einer erfindungsgemäßen Einrichtung,
- Fig. 2a - 2c: mehrere Beispiele von Störsignaturen in schematischer Darstellung,
- Fig. 3: eine weitere schematische Seitenansicht einer erfindungsgemäßen Vorrichtung,
- Fig. 4: eine schematische Blockdarstellung einer erfindungsgemäßen Vorrichtung,
- Fig. 5a - 5d: verschiedene Bearbeitungsschritte einer Aufnahme mit Störsignatur,
- Fig. 6a - 6d: die entsprechenden Bearbeitungsschritte bei einer Referenzaufnahme und
- Fig. 7: ein Beispiel einer typischen Aufnahme einer Zeilenkamera mit Störsignaturen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

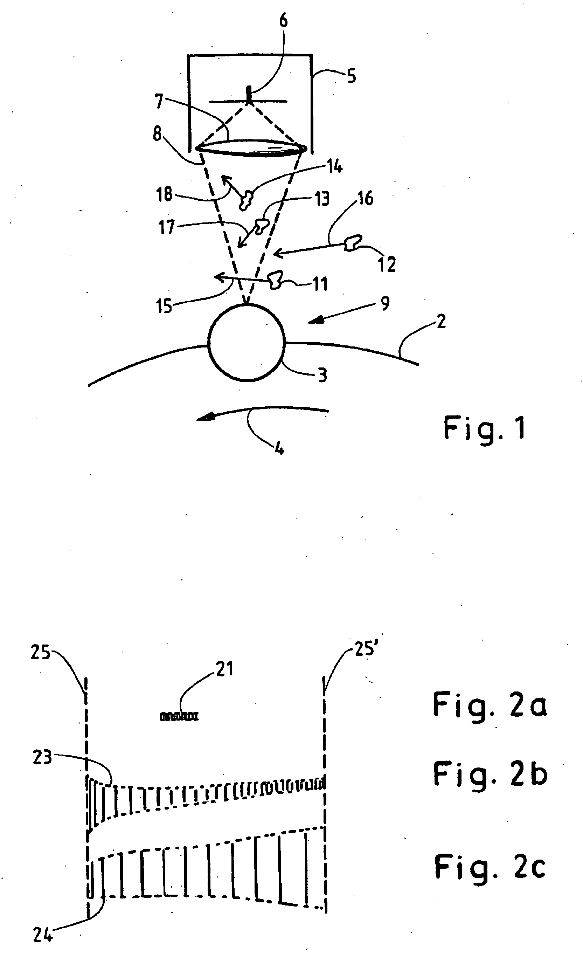

In Fig. 1 ist eine schematische Detailansicht einer erfindungsgemäßen Einrichtung 1 zur optischen Kontrolle dargestellt. In einer Kontrollzone 9 wird auf einer Fördertrommel 2 in einer Mulde ein Produkt 3, beispielsweise eine Zigarette, in einer Förderrichtung 4, hier als Bewegungsvektor des Produkts dargestellt, an einer Bilderfassungsvorrichtung 5 vorbeigefördert. Die Bilderfassungsvorrichtung 5 umfasst eine Zeilenkamera und eine Linse 7. Der äußere Rand des Strahlengangs 8 der Bilderfassungsvorrichtung 5 ist mit gestrichelten Linien dargestellt. Objekte, die sich innerhalb des Strahlengangs 8 befinden, werden von der Zeilenkamera 6 aufgenommen. Der Strahlengang 8 der Zeilenkamera 6 ist auf die Oberfläche des Objekts 3 fokussiert. Mit einer kleineren Geschwindigkeit als der Fördergeschwindigkeit 4 des Produkts 3 treten Staub- oder Tabakpartikel 11, 13, 14 in den Strahlengang 8 ein. Die Bewegungsvektoren der Störpartikel 11, 12, 13, 14 sind mit den Bezugszeichen 15, 16, 17, 18 versehen. Die Bewegungsvektoren 15, 16, 17, 18 bezeichnen den Ort der Störobjekte 11, 12, 13, 14 zu Beginn der Abtastung der Oberfläche des Produkts 3 und zu Ende der Abtastung.

So ist zu erkennen, dass ein Störobjekt 11 zu Beginn der Abtastung noch nicht im Strahlengang 8 der Bilderfassungsvorrichtung ist, sich während der Abtastung mit einer relativ hohen Geschwindigkeit durch den Strahlengang nahe an der Produktoberfläche, d.h. nahe am Fokalpunkt, vorbeibewegt und sich vor Ende der Abtastung aus dem Strahlengang 8 wieder herausbewegt. Ein weiteres Störobjekt 12 tritt während der Abtastung des Produkts 3 nicht in den Strahlengang 8 ein.

Die Störobjekte 13 und 14 sind schon zu Beginn der Abtastung des Produkts 3 im Strahlengang 8 der Bilderfassungsvorrichtung 5 und bewegen sich mit unterschiedlichen Geschwindigkeiten auf das Produkt 3 zu bzw. auf die Bilderfassungsvorrichtung 5 zu. Diese beiden Störobjekte befinden sich während der gesamten Abtastung im Strahlengang 8 der Bilderfassungsvorrichtung.

In Fig. 2a bis 2c sind die entsprechenden Störsignaturen zu den Störpartikeln 11, 13, 14 aus Fig. 1 schematisch dargestellt. Der Zeitverlauf ergibt sich aus dem Beginn 25 und dem Ende 25' einer Aufnahme eines Produkts. Die Störsignatur 21, die von dem Störobjekt 11 erzeugt wird, ist kompakt und wenig ausgewaschen. Dies liegt daran, dass das Störobjekt 11 in der Nähe des Fokuspunkts des Strahlengangs 8 aufgenommen wurde. Er ist kurz, weil nur während eines Teils der Abtastung des Produkts 3 sich das Störbild 11 im Strahlengang 8 befunden hat. Zu Störobjekt 12 ist keine Störsignatur vorhanden, da das Störobjekt 12 den Strahlengang während der Abtastung des Produkts 3 nicht betreten hat. Als Symbol für die Kompaktheit der Signaturen sind in den Figuren 2a bis 2c unterschiedlich dichte Schraffuren gewählt worden, wobei eine weite Schraffur für eine ausgewaschene Signatur steht und umgekehrt.

In Fig. 2b und Fig. 2c sind die Störsignaturen 23 und 24 der Störobjekte 13 und 14 dargestellt. Da sich beide Objekte während der Abtastung des Produkts 3 weiter vom Fokalpunkt entfernt aufhalten, sind beide Störsignaturen weniger kompakt und deutlich ausgewaschener als die Störsignatur 21 des Störobjekts 11. Da sich die Störobjekte 13 und 14 in unterschiedliche Richtungen auf die Bilderfassungseinrichtung 5 bzw. auf das Produkt 3 hinbewegen, ergeben sich Dreieckssignaturen, von denen die Signatur 23 zunächst breit ist und dann kompakter und schmaler wird, während die Störsignatur 24 breit anfängt und noch breiter und ausgewaschener wird, betrachtet von links nach rechts als Maß des Zeitablaufs.

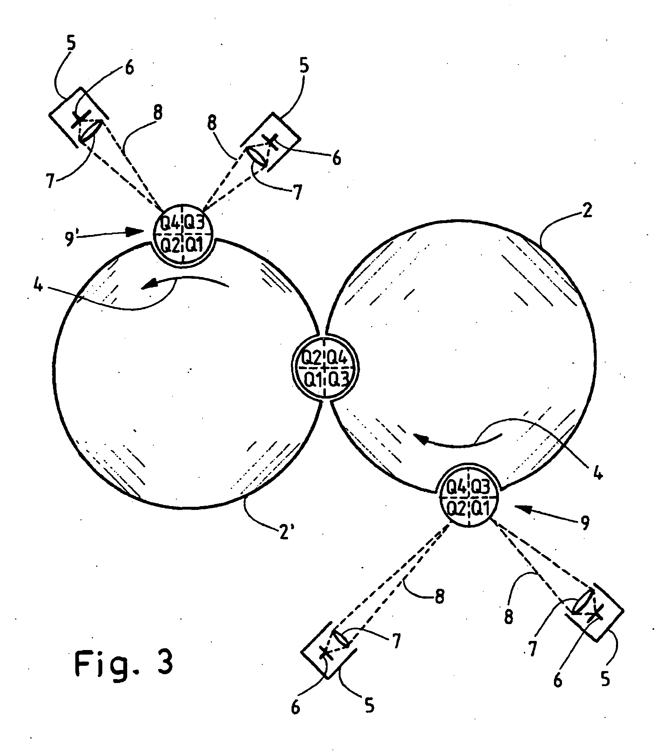

In Fig. 3 ist in schematischer Seitenansicht eine erfindungsgemäße Einrichtung zur optischen Kontrolle dargestellt, mittels der die gesamte Oberfläche von Produkten 3 überprüft werden kann. Dazu wird jedes Produkt 3 auf zwei Fördertrommeln 2 gefördert. Zunächst durchläuft jedes Produkt 3 eine erste Kontrollzone 9. In der ersten Kontrollzone 9 werden jeweils zwei 90°-Abschnitte der Produktoberfläche durch zwei Bilderfassungseinrichtungen 5 mit jeweils einer Zeilenkamera 6 und Linse 7 erfasst, so dass in einem ersten Schritt mit zwei Aufnahmen 180° des Umfangs des Produkts 3 erfasst sind, entsprechend Quadranten Q1 und Q2. Im weiteren Verlauf wird das Produkt 3 an eine zweite Fördertrommel 2' weitergegeben, wobei nunmehr die Quadranten Q3 und Q4 wiederum durch zwei Bilderfassungseinrichtungen 5 erfasst werden. Auf diese Weise wird die gesamte Oberfläche der Produkte 3 erfasst, ohne dass die Produkte mechanisch beansprucht werden.

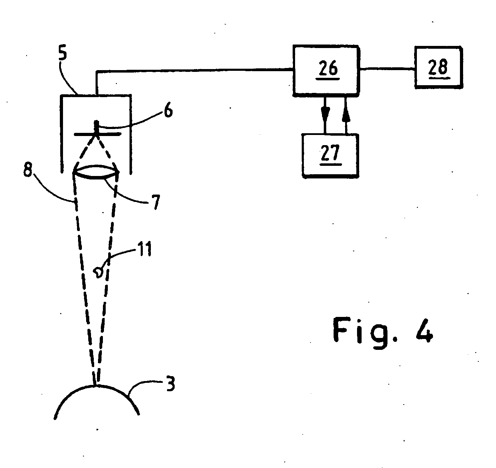

In Fig. 4 ist schematisch eine Blockdarstellung der erfindungsgemäßen Einrichtung 1 dargestellt. Die zuvor vorgestellte Bilderfassungsvorrichtung 5 ist mit einer Analyseeinrichtung 26 verbunden, die die erfassten Aufnahmen einer optischen Analyse unterzieht. Dabei werden die Aufnahmen auf das Vorhandensein von Störsignaturen untersucht. Werden Störsignaturen erkannt, so wird die Aufnahme mittels einer Korrekturvorrichtung 27, die auch in der Analyseeinrichtung 26 inkorporiert sein kann, korrigiert und einer weiteren Analyse auf Qualitätsmerkmale des Produkts unterzogen. Entspricht das Produkt nicht den erforderlichen Maßstäben, so wird ein Signal an eine Aussonderungsvorrichtung 28 gesandt, so dass das nicht ordnungsgemäße Produkt 3 im Folgenden ausgesondert wird.

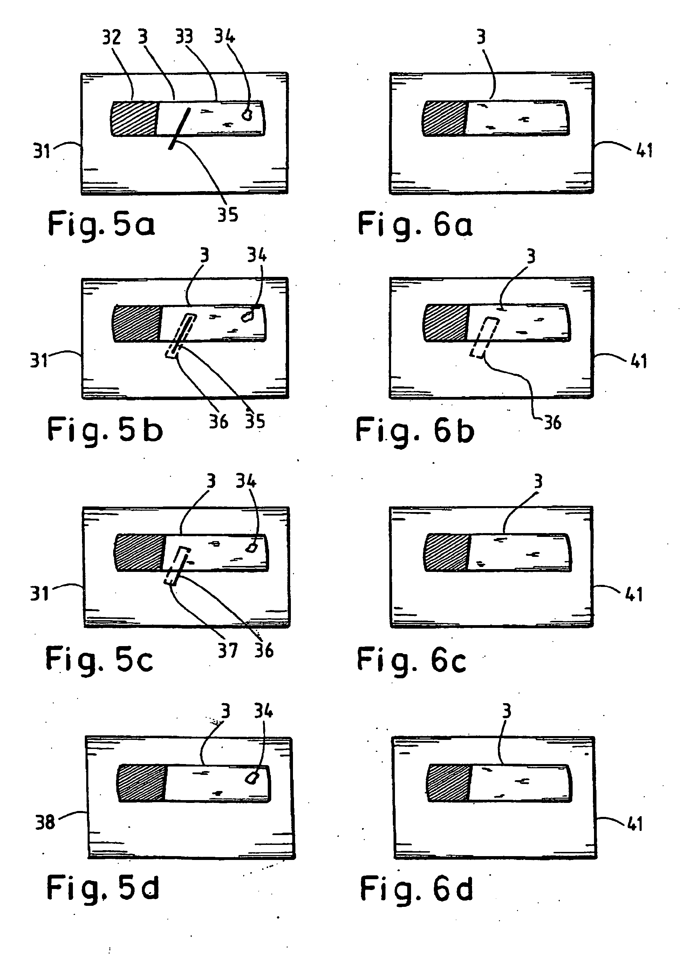

In den Figuren 5a bis 5d und 6a bis 6b sind Aufnahmen 31 von Teilen der Oberfläche von Zigaretten 3 in verschiedenen Analysestufen und daneben jeweils eine Referenzaufnahme, die zeigt, wie ein ordnungsgemäßes Produkt 3 aussieht.

In Fig. 5a ist erkennbar, dass ein Produkt 3 einen Filter 32, eine Papierumhüllung 33 und einen Oberflächendefekt 34 auf der Papierumhüllung 33 aufweist. Außerdem ist eine Störsignatur 35 in Form einer Linie erkennbar. Die entsprechende Referenzaufnahme in Fig. 6a weist weder ein Störsignal 35 noch einen Oberffächendefekt 34 auf. In Fig. 5b ist gezeigt, dass der von der Störsignatur 35 betroffene Bereich mit einer Maskierung 36 maskiert wird. Die Maskierung 36 ist in der Referenzaufnahme 41 in Fig. 6b gespiegelt.

In Fig. 5c ist zu sehen, dass der maskierte Referenzbereich aus der Referenzaufnahme 41 in die Aufnahme 31 in die Stelle der maskierten Störsignatur 35 gesetzt worden ist. Hierbei handelt es sich um einen Flächenersatz 37. Der Oberflächendefekt 34 ist durch diese Flächenersetzung nicht betroffen. Es ergibt sich in Fig. 5d ein korrigiertes Bild 38, in dem ein Produkt 3 mit einem Oberflächendefekt 34 gezeigt ist, bei dem die Störsignatur 35 effektiv entfernt ist. Da die korrigierte Aufnahme 38 des Produkts 3 der Referenzaufnahme 41 in Fig. 6d nicht entspricht, wird das entsprechende Produkt ausgesondert werden.

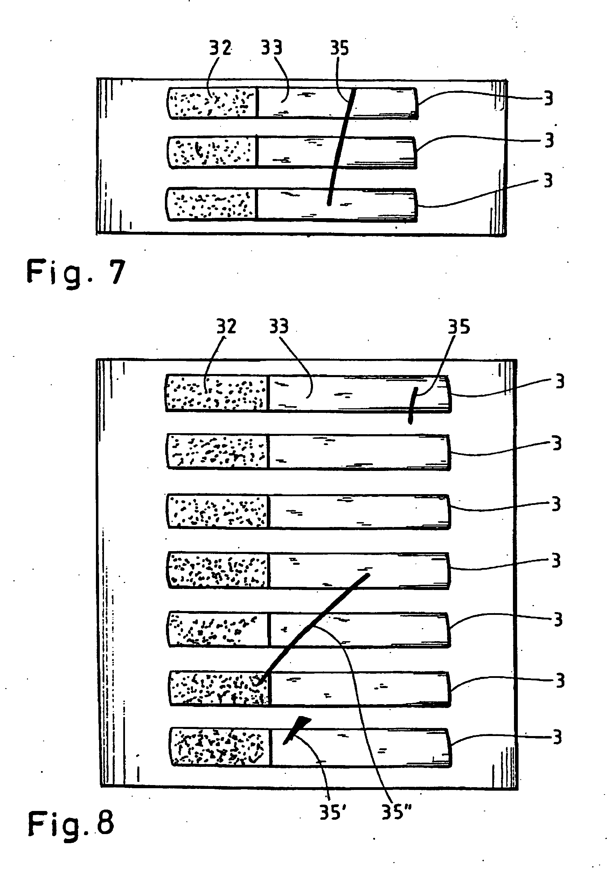

In den Figuren 7 und 8 sind zwei Aufnahmen einer Zeilenkamera von unter der Zeilenkamera herlaufenden Produkten 3 gezeigt. Deutlich ist in Fig. 7 erkennbar, dass ein Störobjekt mit einer langen Signatur 35 vorhanden ist, das daher rührt, dass ein Objekt sich mit langsamer Geschwindigkeit durch den Strahlengang der aufnehmenden Zeilenkamera bewegt hat. Dabei hat es eine geringe seitliche Bewegungskomponente.

In Fig. 8 sind mehrere kürzere Signaturen 35 zu erkennen. Am oberen Bildrand gerät erst während der Abtastung eines ersten Produkts 3 ein Störobjekt in den Strahlengang der Zeilenkamera, so dass die Signatur erst scheinbar auf der Fläche des Produkts 3 beginnt. An dem fünften Produkt von oben ist eine Signatur eines Störobjekts mit starker seitlicher Bewegungskomponente zu erkennen (Bezugszeichen 35"). Am zuunterst dargestellten Produkt 3 ist eine dreiecksförmige Störsignatur 35' sichtbar, die sehr stark ausgeprägt ist, mit einer ebenfalls starken seitlichen Bewegungskomponente. In diesem Fall ist das Störobjekt mit hoher Geschwindigkeit durch den Strahlengang der Zeilenkamera getreten, denn die Signatur ist kurz. Sie beginnt im Zwischenraum zwischen der zweituntersten und der untersten Zigarette 3 und endet bereits vor der Mitte der zuunterst abgebildeten Zigarette 3. Die Filter 32 der Produkte 3 sind in den Figuren 7 und 8 punktiert dargestellt.

### Bezugszeichenliste

- 1: optische Kontrolleinrichtung
- 2, 2': Fördertrommel
- 3: Produkt
- 4: Bewegungsvektor des Produkts
- 5: Bilderfassungsvorrichtung
- 6: Zeile einer Zeilenkamera
- 7: Linse
- 8: Strahlengang
- 9: Kontrollzone
- 11 - 14: Störobjekt
- 15 - 18: Bewegungsvektoren der Störobjekte
- 21 - 24: Störsignaturen
- 25: Beginn der Aufnahme
- 25': Ende der Aufnahme
- 26: Analyseeinrichtung
- 27: Korrekturvorrichtung
- 28: Aussonderungsvorrichtung
- 31: Aufnahme eines Produkts
- 32: Filter
- 33: Papierumhüllung
- 34: Oberflächendefekt
- 35, 35', 35": Störsignatur
- 36: Störsignatur
- 37: Flächenersatz
- 38: korrigierte Aufnahme
- 41: Referenzaufnahme

## Patentansprüche

1. Verfahren zur elektromagnetischen, insbesondere optischen, Kontrolle von Produkten (3) der Tabak verarbeitenden Industrie in wenigstens einer Kontrollzone (9), in der die Produkte (3) an wenigstens einer Bilderfassungsvorrichtung (5) vorbei gefördert werden, wobei mittels der wenigstens einen Bilderfassungsvorrichtung (5) wenigstens eine Aufnahme (31) wenigstens eines Teils wenigstens eines Produkts (3) aufgenommen wird, wobei eine einzelne Aufnahme (31) wenigstens eines Teils eines Produkts auf das Vorhandensein wenigstens einer Störsignatur (21, 22, 23, 24) eines zwischen dem Produkt (3) und der Bilderfassungsvorrichtung (5) befindlichen Störobjekts (11, 12, 13, 14) überprüft wird, **dadurch gekennzeichnet, dass** die Störsignatur (21, 22, 23, 24) eine von einer Fördergeschwindigkeit und/oder Förderrichtung (4) der Produkte verschiedene Geschwindigkeit oder Bewegungsrichtung (15, 16, 17, 18) eines Störobjekts (11, 12, 13, 14) wiedergibt, wobei als Störsignatur (21, 22, 23, 24) ein Streifen oder eine Dreiecksform in der Aufnahme (31) des Produkts (3) erkannt wird, wobei zur Korrektur der Aufnahme (31) der durch die Störsignatur (21, 22, 23, 24) betroffene Bereich ausmaskiert wird und wobei zur Korrektur der Aufnahme (31) der durch die Störsignatur (21, 22, 23, 24) betroffene Bereich durch umgebungsspezifische Daten, insbesondere umgebungsspezifische Helligkeitswerte, normalisiert oder durch einen entsprechenden Bereich einer Referenzaufnahme (41) ersetzt wird, wobei die Bilderfassungsvorrichtung (5) eine Zeilenkamera (6) umfasst und die Aufnahme (31) aus aufeinander folgenden Zeilenaufnahmen der Zeilenkamera (6) zusammengesetzt wird.

2. Verfahren nach Anspruch 1, **dadurch gekennzeichnet, dass** die Aufnahme (31) nach der Überprüfung auf Störsignaturen (21, 22, 23, 24) auf das Vorhandensein von Defekten (34) auf der Produktoberfläche analysiert wird, wobei erkannte Störsignaturen (21, 22, 23, 24) in der weiteren Analyse der Aufnahme (31) nicht als Defekte (34) des Produkts (3) behandelt werden.

3. Verfahren nach Anspruch 1 oder 2, **dadurch gekennzeichnet, dass** die Aufnahme (31) eine flächige Abbildung wenigstens eines flächigen Teils der Produktoberfläche ist.

4. Verfahren nach einem der Ansprüche 1 bis 3, **dadurch gekennzeichnet, dass** die korrigierte Aufnahme (38) auf das Vorhandensein von Defekten (34) des Produkts (3) analysiert wird.

5. Verfahren nach einem der Ansprüche 1 bis 4, **dadurch gekennzeichnet, dass** mit mehreren Aufnahmen (31, 38) eine gesamte Oberfläche des Produkts (3) analysiert wird, wobei die Aufnahmen (31, 38) zur Analyse zu einer Gesamtaufnahme der gesamten Oberfläche des Produkts (3) zusammengesetzt werden.

6. Einrichtung (1) zur elektromagnetischen, insbesondere optischen, Kontrolle von in wenigstens einer Kontrollzone (9) an wenigstens einer Bilderfassungsvorrichtung (5) vorbei geförderten Produkten (3) der Tabak verarbeitenden Industrie mit einer Analyseeinrichtung (26), **dadurch gekennzeichnet, dass** die Analyseeinrichtung (26) zur Erkennung von Störsignaturen (21, 22, 23, 24) in Form von Streifen oder Dreiecken in einer Aufnahme (31) des Produkts (3) von zwischen dem Produkt (3) und der Bilderfassungsvorrichtung (5) befindlichen Störobjekten (11, 12, 13, 14) ausgebildet ist, wobei eine Korrekturvorrichtung (27) zur Korrektur von Störsignaturen (21, 22, 23, 24) in von der Bilderfassungsvorrichtung (5) aufgenommen Aufnahmen (31) vorgesehen ist, wobei die Korrekturvorrichtung (27) ausgebildet ist, einen durch eine Störsignatur (21, 22, 23, 24) betroffenen Bereich einer Aufnahme (31) auszumaskieren und wobei die Korrekturvorrichtung (27) ausgebildet ist, einen durch eine Störsignatur (21, 22, 23, 24) betroffenen Bereich einer Aufnahme (31) durch umgebungsspezifische Daten, insbesondere umgebungsspezifische Helligkeitswerte, zu normalisieren oder durch einen entsprechenden Bereich einer Referenzaufnahme (41) zu ersetzen, wobei die Bilderfassungsvorrichtung (5) eine Zeileinkamera (6) umfasst.

7. Einrichtung (1) nach Anspruch 6, **dadurch gekennzeichnet, dass** die Analyseeinrichtung (26) zur Erkennung von Defekten (34) auf der Produktoberfläche unter Ausschluss von erkannten Störsignaturen (21, 22, 23, 24) ausgebildet ist.

8. Einrichtung (1) nach einem der Ansprüche 6 bis 7, **dadurch gekennzeichnet, dass** sie zur Ausführung eines Verfahrens nach einem der Ansprüche 1 bis 5 ausgebildet ist.

9. Maschine der Tabak verarbeitenden Industrie, umfassend eine Einrichtung (1) nach einem der Ansprüche 6 bis 8.

## Claims

1. Method of electromagnetically, in particular optically, controlling products (3) in the tobacco processing industry in at least one control zone (9) in which the products (3) are conveyed past at least one image recording device (5), whereby at least one image (31) of at least a part of a product (3) is recorded by means of the at least one image recording device (5), and an individual image (31) of at least a part of a product is checked for the presence of at least one interference signature (21, 22, 23, 24) of an interference object (11, 12, 13, 14) disposed between the product (3) and the image recording device (5), **characterised in that** the interference signature (21, 22, 23, 24) represents a speed or direction of movement (15, 16, 17, 18) of an interference object (11, 12, 13, 14) that is different from a conveying speed and/or conveying direction (4) of the products, and a stripe or a triangular shape in the image (31) of the product (3) is detected as the interference signature (21, 22, 23, 24), and the area affected by the interference signature (21, 22, 23, 24) is masked out in order to correct the image (31), and the area affected by the interference signature (21, 22, 23, 24) is normalised on the basis of data specific to the ambient environment, in particular brightness values specific to the ambient environment, or is replaced by a corresponding area of a reference image (41) in order to correct the image (31), and the image recording device (5) comprises a line camera (6) and the image (31) is compiled from consecutive line images of the line camera (6).

2. Method as claimed in claim 1, **characterised in that**, after checking interference signatures (21, 22, 23, 24) for the presence of defects (34) on the product surface, the image (31) is analysed, and the detected interference signatures (21, 22, 23, 24) are not treated as defects (34) of the product (3) during subsequent analysis of the image (31).

3. Method as claimed in claim 1 or 2, **characterised in that** the image (31) is a flat reproduction of at least one flat part of the product surface.

4. Method as claimed in one of claims 1 to 3, **characterised in that** the corrected image (38) is analysed for the presence of defects (34) of the product (3).

5. Method as claimed in one of claims 1 to 4, **characterised in that** a total surface of the product (3) is analysed on the basis of several images (31, 38) and the images (31, 38) are compiled to a total image of the total surface of the product (3) for analysis.

6. Device (1) for electromagnetically, in particular optically, controlling products (3) in the tobacco processing industry conveyed past at least one image recording device (5) in at least one control zone (9), with an analysing device (26), **characterised in that** the analysing device (26) is configured to detect interference signatures (21, 22, 23, 24) of interference objects (11, 12, 13, 14) between the product (3) and the image recording device (5) in the form of stripes or triangles in an image (31) of the product (3), and a correcting device (27) is provided as a means of correcting interference signatures (21, 22, 23, 24) in images (31) recorded by the image recording device (5), and the correcting device (27) is configured to mask out an area of an image (31) affected by an interference signature (21, 22, 23, 24) and the correcting device (27) is configured to normalise an area of an image (31) affected by an interference signature (21, 22, 23, 24) on the basis of data specific to the ambient environment, in particular brightness values specific to the ambient environment, or replace it with a corresponding area of a reference image (41), and the image recording device (5) comprises a line camera (6).

7. Device (1) as claimed in claim 6, **characterised in that** the analysing device (26) is configured to detect defects (34) on the product surface whilst excluding detected interference signatures (21, 22, 23, 24).

8. Device (1) as claimed in one of claims 6 to 7, **characterised in that** it is designed to implement a method as claimed in one of claims 1 to 5.

9. Machine in the tobacco processing industry, comprising a device (1) as claimed in one of claims 6 to 8.

## Revendications

1. Procédé de contrôle électromagnétique, en particulier optique, de produits (3) de l'industrie de transformation du tabac dans au moins une zone de contrôle (9) dans laquelle les produits (3) passent devant au moins un dispositif d'acquisition d'images (5), procédé dans lequel est réalisée, au moyen du dispositif d'acquisition d'images (5), au moins au nombre de un, au moins une capture (31) d'au moins une partie d'au moins un produit (3), une capture (31) individuelle d'au moins une partie d'un produit étant contrôlée pour détection de la présence d'au moins une signature parasite (21, 22, 23, 24) d'un objet parasite (11, 12, 13, 14) se trouvant entre le produit (3) et le dispositif d'acquisition d'images (5), **caractérisé en ce que** la signature parasite (21, 22, 23, 24) reproduit une vitesse ou direction de mouvement (15, 16, 17, 18) d'un objet parasite (11, 12, 13, 14) différente d'une vitesse de transport et/ou direction de transport (4) des produits, une bande ou une forme triangulaire étant détectée comme signature parasite (21, 22, 23, 24) dans la capture (31) du produit (3), la région concernée par la signature parasite (21, 22, 23, 24) étant masquée pour la correction de la capture (31) et la région concernée par la signature parasite (21, 22, 23, 24) étant, pour la correction de la capture (31), normalisée par des données spécifiques à l'environnement, en particulier des valeurs de luminosité spécifiques à l'environnement, ou remplacée par une région correspondante d'une capture de référence (41), le dispositif d'acquisition d'images (5) comprenant une caméra linéaire (6) et la capture (31) étant constituée de captures linéaires successives de la caméra linéaire (6).

2. Procédé selon la revendication 1, **caractérisé en ce qu'**après le contrôle de détection de signatures parasites (21, 22, 23, 24) la capture (31) est analysée pour détecter la présence de défauts (34) sur la surface du produit, des signatures parasites (21, 22, 23, 24) détectées n'étant pas traitées comme des défauts (34) du produit (3) lors de l'analyse ultérieure de la capture (31).

3. Procédé selon la revendication 1 ou 2, **caractérisé en ce que** la capture (31) est une représentation plane d'au moins une partie plane de la surface du produit.

4. Procédé selon l'une des revendications 1 à 3, **caractérisé en ce que** la capture corrigée (38) est analysée pour détection de la présence de défauts (34) du produit (3).

5. Procédé selon l'une des revendications 1 à 4, **caractérisé en ce qu'**on analyse une surface totale du produit (3) à l'aide de plusieurs captures (31, 38), les captures (31, 38) étant regroupées pour l'analyse en une capture globale de la surface totale du produit (3).

6. Dispositif (1) destiné au contrôle électromagnétique, en particulier optique, de produits (3) de l'industrie de transformation du tabac passant devant au moins un dispositif d'acquisition d'images (5) dans au moins une zone de contrôle (9) au moyen d'un dispositif d'analyse (26), **caractérisé en ce que** le dispositif d'analyse (26) est conçu pour la détection de signatures parasites (21, 22, 23, 24), sous forme de bandes ou de triangles dans une capture (31) du produit (3), d'objets parasites (11, 12, 13, 14) se trouvant entre le produit (3) et le dispositif d'acquisition d'images (5), un dispositif de correction (27) étant prévu pour la correction de signatures parasites (21, 22, 23, 24) dans des captures (31) réalisées par le dispositif d'acquisition d'images (5), le dispositif de correction (27) étant conçu pour masquer une région d'une capture (31) concernée par une signature parasite (21, 22, 23, 24) et le dispositif de correction (27) étant conçu pour normaliser, par des données spécifiques à l'environnement, en particulier des valeurs de luminosité spécifiques à l'environnement, ou remplacer par une région correspondante d'une capture de référence (41), une région d'une capture (31) concernée par une signature parasite (21, 22, 23, 24), le dispositif d'acquisition d'images (5) comprenant une caméra linéaire (6).

7. Dispositif (1) selon la revendication 6, **caractérisé en ce que** le dispositif d'analyse (26) est conçu pour la détection de défauts (34) sur la surface du produit à l'exclusion de signatures parasites (21, 22, 23, 24) détectées.

8. Dispositif (1) selon l'une des revendications 6 à 7, **caractérisé en ce qu'**il est conçu pour la réalisation d'un procédé selon l'une des revendications 1 à 5.

9. Machine de l'industrie de transformation du tabac, comprenant un dispositif (1) selon l'une des revendications 6 à 8.
